# EUROPÄISCHE PATENTSCHRIFT

(11) **EP 3 036 350 B1**
(45) Veröffentlichungstag und Bekanntmachung des Hinweises auf die Patenterteilung: **30.01.2019**
(21) Anmeldenummer: 14747522.2
(22) Anmeldetag: 31.07.2014
(51) Int. Cl.: C23C 4/02, C23C 4/131, C21D 7/08, F16J 10/04, C22F 1/04

(54) **VERFAHREN ZUM BESCHICHTEN EINER ZYLINDERWAND EINES VERBRENNUNGSMOTORS**
METHOD OF COATING OF A CYLINDER WALL OF AN INTERNAL COMBUSTION ENGINE
PROCÉDÉ DE REVÊTEMENT D'UNE PAROI DE CYLINDRE D'UN MOTEUR À COMBUSTION INTERNE

(30) Priorität: 21.08.2013 DE 102013013830
(43) Veröffentlichungstag der Anmeldung: 29.06.2016
(73) Patentinhaber: Bayerische Motoren Werke Aktiengesellschaft, 80809 München (DE); Technische Universität München, 80290 München (DE)
(72) Erfinder: WAGENER, Wolfram, 84144 Geisenhausen (DE); WOISETSCHLAEGER, Patrick, 84028 Landshut (DE)
(74) Vertreter: Zeitler Volpert Kandlbinder Patent- und Rechtsanwälte Partnerschaft mbB
(86) Internationale Anmeldenummer: PCT/EP2014/002116
(87) Internationale Veröffentlichungsnummer: WO 2015/024628

(56) Entgegenhaltungen:
- EP-A2- 2 267 178
- WO-A1-2012/095215
- DE-A1-102009 030 683

## Beschreibung

Die Erfindung betrifft ein Verfahren zum Beschichten einer Zylinderwand eines Verbrennungsmotors, wobei diese zuvor aufgeraut wird, um die Haftung der Beschichtung zu verbessern.

Verbrennungsmotoren in Kraftfahrzeugen werden aus Gewichtsgründen häufig mit einem Zylinderkurbelgehäuse aus Leichtmetall, insbesondere einer Aluminiumlegierung, ausgebildet. Problematisch daran ist jedoch, dass die Wände der von dem Zylinderkurbelgehäuse ausgebildeten Zylinder wegen der tribologischen Eigenschaften des Leichtmetalls, insbesondere der vergleichsweise schlechten Verschleißfestigkeit, nur unzureichend als Laufflächen für die Kolben geeignet sind.

Um diese Problematik zu vermeiden, werden in vielen Verbrennungsmotoren mit einem Zylinderkurbelgehäuse aus Leichtmetall Laufbuchsen aus beispielsweise Grauguss eingesetzt, wodurch die Vorteile des Leichtmetalls (geringes spezifisches Gewicht) mit denjenigen des Graugusses (gute tribologische Eigenschaften) kombiniert werden können.

Alternativ dazu ist es bekannt, die Zylinderwände des Leichtmetall-Zylinderkurbelgehäuses mit einer Beschichtung zu versehen, um die gewünschten tribologischen Eigenschaften für die Laufflächen zu realisieren. Die Beschichtung wird dabei regelmäßig durch Aufschmelzen des Beschichtungswerkstoffs und Aufspritzen auf die Zylinderwände realisiert.

Von besonderer Bedeutung bei der Beschichtung von Zylinderwänden ist, eine gute Haftung der Beschichtungsschicht auf dem Grundwerkstoff zu realisieren. Hierzu ist es bekannt, die Zylinderwände des Zylinderkurbelgehäuses vor dem Beschichten aufzurauen, um die Kontaktfläche zwischen den Schichten zu erhöhen. Vielfach wird dabei auch versucht, Hinterschnitte in den aufgerauten Zylinderwänden auszubilden, in die der aufgeschmolzene Beschichtungswerkstoff eindringen kann, um nach dem Aushärten eine formschlüssige Verbindung mit den Zylinderwänden zu realisieren.

Verschiedene Möglichkeiten zum Aufrauen von Zylinderwänden sind bekannt.

Zum einen kommen als "Hochdruckstrahlen" bezeichnete Verfahren zum Einsatz, bei denen die Zylinderwände mittels (Feststoff-)Partikeln oder einer Flüssigkeit unter hohem Druck bestrahlt werden. Dadurch werden Partikel des Wandmaterials herausgebrochen und das Wandmaterial punktuell plastisch deformiert. Verbreitet sind insbesondere ein Bestrahlen mit Sand oder Korund, die mittels Druckluft ausgebracht werden, sowie ein Bestrahlen mit Wasser oder einer Emulsion. Dabei werden die Druckluft oder die Flüssigkeit unter einem sehr hohen Druck von regelmäßig 1500 bar bis 3500 bar aus den dazu eingesetzten Düsen ausgebracht. Nachteilig an dem Hochdruckstrahlen ist der schnelle Verschleiß der Düsen infolge des hohen Drucks, gegebenenfalls in Verbindung mit dem Austrag eines abrasiven Materials. Zudem ist das Einhalten von Form- und Lagetoleranzen schwierig und daher mit einem erheblichen Aufwand verbunden. Und schließlich ist ein hoher Verbrauch des eingesetzten Mediums zu verzeichnen, was teilweise auch mit einem erheblichen Wiederaufbereitungsaufwand verbunden sein kann.

Weiterhin ist es bekannt, Zylinderwände mechanisch aufzurauen. Dies kann beispielsweise durch Raudrehen oder Rillieren erfolgen. Dabei werden in einem spanenden oder spanlosen Prozess mittels eines oder mehrerer Werkzeuge Nuten oder Rillen in die Zylinderwände eingebracht.

So ist beispielsweise aus der DE 10 2009 027 200 B3 bekannt, in einem ersten Verfahrensschritt zum Aufrauen einer Zylinderwand eine spiralförmige Nut mit insbesondere rechteckigem oder trapezförmigem Querschnitt in die Zylinderwand einzubringen. Dies kann sowohl spanend als auch spanlos erfolgen. In einem zweiten Schritt wird daraufhin der zwischen der Nut spiralförmig verlaufende Steg abschnittsweise radial plastisch verformt, um Hinterschnitte auszubilden. Zum Einbringen der Nut wird ein Werkzeug eingesetzt, das eine einzelne Schneide aufweist, wobei das Werkzeug sowohl rotierend angetrieben als auch axial entlang der Längsachse des Zylinders verfahren wird.

Alternative Verfahren zum Vorbereiten von Zylinderwänden für eine nachfolgende Beschichtung sind das chemische sowie das elektrische Aufrauen, das Bürsten sowie das Haftgrundspritzen.

Die Druckschrift DE 10 2009 030 683 A1 beschreibt ein Verfahren zum Beschichten einer Zylinderlauffläche durch ein thermisches Spritzverfahren, bei dem die Laufflächen zunächst verdichtet und anschließend aufgeraut werden

Ausgehend von diesem Stand der Technik lag der Erfindung die Aufgabe zugrunde, die Qualität der Verankerung einer Beschichtungsschicht auf einer Zylinderwand zu verbessern.

Diese Aufgabe wird durch ein Verfahren gemäß dem unabhängigen Patentanspruch 1 gelöst. Vorteilhafte Ausgestaltungen des erfindungsgemäßen Verfahrens sind Gegenstand der abhängigen Patentansprüche und ergeben sich aus der nachfolgenden Beschreibung der Erfindung.

Der Erfindung liegt die Erkenntnis zugrunde, dass die Haftung einer Beschichtungsschicht auf einer Zylinderwand auch in nicht unwesentlichem Maße von der Güte des Grundwerkstoffs des die Zylinder ausbildenden Zylindergehäuses bestimmt wird. Zylindergehäuse werden zumeist durch Gießen hergestellt, was nahezu unweigerlich mit der Ausbildung von Inhomogenitäten, wie beispielsweise Lunkern, Porosität oder anderen Gefügefehlern verbunden ist. Diese Inhomogenitäten können die Haftung der Beschichtung verschlechtern, da an den Fehlstellen eine mangelnde Anbindung der Beschichtungsschicht an den Grundwerkstoff gegeben sein kann.

Ausgehend davon liegt der Erfindung der Gedanke zugrunde, die Inhomogenitäten noch vor dem Aufrauen zumindest oberflächennah so weit wie möglich zu entfernen.

Dazu ist ein gattungsgemäßes Verfahren zum Beschichten einer Zylinderwand eines Verbrennungsmotors, bei dem die Zylinderwand vor dem Beschichten aufgeraut wird, dadurch weitergebildet, dass die Zylinderwand vor dem Aufrauen teilweise durch plastische Verformung verdichtet wird.

Durch die Verdichtung der Zylinderwand können insbesondere Gefügehohlräume verschlossen und somit eine Porosität verringert werden. Auch können nur lose im Grundwerkstoff eingebundene Partikel fester verankert werden. Dies kann für die zu erreichende bessere Verankerung der nachträglich aufgebrachten Beschichtungsschicht auf dem Grundwerkstoff sorgen.

Durch das erfindungsgemäße Verdichten kann zudem eine grundsätzliche erhöhte Festigkeit für den den Zylinder umgebenden Grundwerkstoff erreicht werden. Dadurch kann die Gefahr einer Zylinderverformung im späteren Betrieb des Verbrennungsmotors verringert werden.

Unter "Aufrauen" wird das Einbringen oder Freilegen einer Mehrzahl von Vertiefungen in der Zylinderwand verstanden.

Gemäß dem erfindungsgemäßen Verfahren ist vorgesehen, dass die Zylinderwand nur teilweise verdichtet wird und mehrere verdichtete und unverdichtete Abschnitte der Zylinderwand in abwechselnder Reihenfolge erzeugt werden. Dadurch kann insbesondere das dem Verdichten nachfolgende Aufrauen der Zylinderwand vereinfacht und/oder beschleunigt werden. Insbesondere kann dann ausgenutzt werden, dass sich die unverdichteten Abschnitte im Vergleich zu den verdichteten Abschnitten der

Zylinderwand unter Einsatz von geringeren Kräften bzw. verringerter Energie abtragen lassen. Im Umkehrschluss kann somit beim Einsatz einer im Wesentlichen gleichbleibenden Kraft oder Energie während des Aufrauens eine Struktur der Zylinderwand erzeugt werden, die beispielsweise der aus der DE 10 2009 027 200 B3 bekannten Nutstruktur, d.h. insbesondere mit einer oder mehreren umlaufenden, insbesondere spiralförmig umlaufenden Nuten, ähneln kann. Vorteilhaft kann dabei zudem sein, dass die erfindungsgemäß ausgebildete Nutstruktur weniger exakt ausgebildete Ecken und Kanten aufweisen kann, wodurch Kerbwirkungen, die diese Ecken und Kanten insbesondere in der die Nutstruktur als Negativ abbildenden Beschichtungsschicht haben können, verringert werden können.

Besonders bevorzugt kann vorgesehen sein, dass das Aufrauen durch Bestrahlen mit (mindestens) einem flüssigen (z.B. Wasser oder eine Emulsion) und/oder partikelförmigen (z.B. Sand- und/oder Korund) Medium erfolgt. Dies kann den Vorteil aufweisen, dass durch das verstärkte Abtragen des Grundwerkstoffs in den unverdichteten Abschnitten mittels des Mediums eine beispielsweise der aus der DE 10 2009 027 200 B3 bekannten Nutstruktur ähnelnde Makrostruktur ausgebildet wird, die zudem von einer Mikrostruktur aus einer Vielzahl von Mikrovertiefungen, die für ein Aufrauen durch Bestrahlen typisch ist, überlagert wird. Insgesamt kann dadurch eine besonders gute Verzahnung und damit Haftung der Beschichtungsschicht auf der Zylinderwand realisiert werden.

Unter "Mikrovertiefungen" werden Vertiefungen verstanden, deren Abmessungen kleiner (insbesondere einem höherzahligen Bruchteil entsprechend) als die vergleichbaren Abmessungen der infolge einer nur teilweisen Verdichtung freigelegten Vertiefungsstruktur (Makrostruktur) sind.

Neben einem Bestrahlen kann ein Aufrauen beispielsweise auch durch Belichtung mittels eines Lasers und/oder durch eine mechanische Bearbeitung erfolgen, wobei die Vorteile einer nur teilweise verdichteten Zylinderwand auch bei diesen Verfahren ausgenutzt werden können.

Unter einem "mechanischen Aufrauen" wird ein Prozess verstanden, bei dem mittels mindestens eines von einer Bearbeitungsmaschine geführten Werkzeugs durch direkten Kontakt Vertiefungen in spanender oder spanloser (d.h. durch plastische Deformation) Weise in die Wand des Zylinders eingebracht werden.
Das Beschichten kann auf beliebige im Stand der Technik bekannte Art und Weise erfolgen, wobei vorzugsweise ein thermisches Spritzverfahren, bei dem der Beschichtungswerkstoff im aufgeschmolzenen Zustand auf die Zylinderwand aufgespritzt wird und dort aushärtet, zum Einsatz kommen kann. Beispiele für thermische Spritzverfahren sind das Lichtbogendrahtspritzen und das Plasmabeschichten.
Die Erfindung wird nachfolgend anhand von in den Zeichnungen dargestellten Ausführungsbeispielen näher erläutert. Die Zeichnungen zeigen in:
- Fig. 1:: ein teilweises Verdichten einer Zylinderwand als ein erster Schritt eines erfindungsgemäßen Verfahrens zum Beschichten der Zylinderwand;
- Fig. 2:: eine Draufsicht auf den zu beschichtenden Zylinder mit dem zum Verdichten eingesetzten Werkzeug;
- Fig. 3:: ein Bestrahlen der Zylinderwand als ein zweiter Schritt eines erfindungsgemäßen Verfahrens zum Beschichten der Zylinderwand;
- Fig. 4:: die Zylinderwand nach dem Bestrahlen;
- Fig. 5:: das Beschichten der Zylinderwand als ein dritter Schritt des erfindungsgemäßen Verfahrens; und
- Fig. 6:: ein vollflächiges Verdichten einer Zylinderwand als ein zu dem teilweisen Verdichten alternativer erster Schritt eines erfindungsgemäßen Verfahrens zum Beschichten einer Zylinderwand.

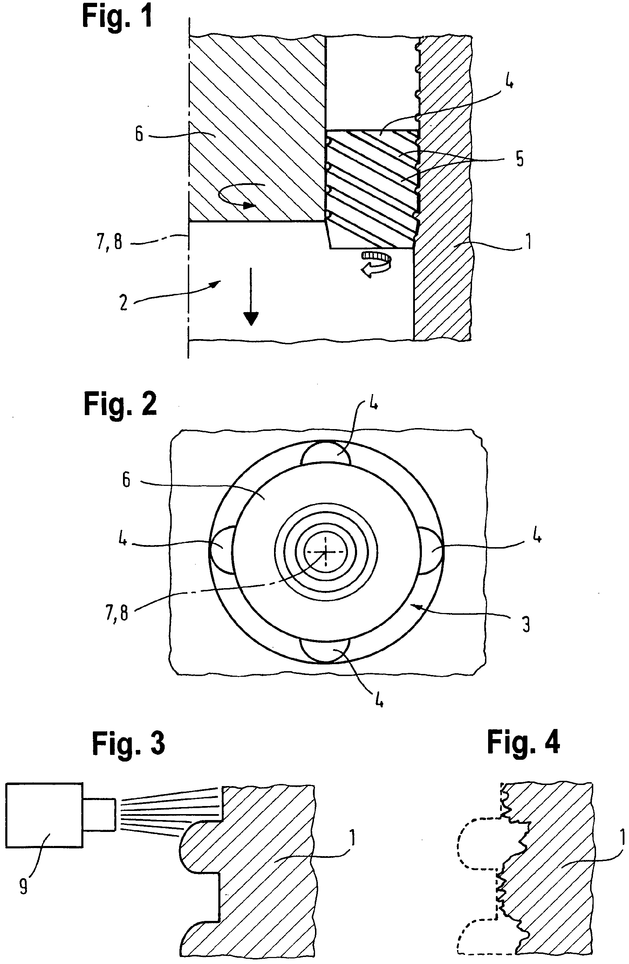

Die Fig. 1 bis 5 zeigen in schematischen Darstellungen verschiedene Schritte eines erfindungsgemäßen Verfahrens zum Beschichten einer (Zylinder-)Wand eines von einem Zylinderkurbelgehäuse 1 ausgebildeten Zylinders 2 sowie die dabei eingesetzten Vorrichtungen.

Das Zylinderkurbelgehäuse 1 kann als Gussbauteil aus einem Leichtmetall und insbesondere einer Aluminiumlegierung ausgebildet sein. Das Gussbauteil und insbesondere die Zylinderwand können noch vor der Durchführung eines nachfolgend beschriebenen, erfindungsgemäßen Verfahrens mechanisch bearbeitet und insbesondere glattgefräst und/oder glattgedreht werden.

In einem ersten Schritt des erfindungsgemäßen Verfahrens wird die Zylinderwand durch teilweise plastische Verformung des Grundwerkstoffs des Zylinderkurbelgehäuses 1 (teilweise) oberflächennah verdichtet. Hierzu wird ein Rollierwerkzeug 3 eingesetzt, das eine Mehrzahl von Rollierkörpern 4 umfasst, die auf ihren Außenseiten umlaufende Vertiefungen 5 aufweisen. Die Rollierkörper 4 sind umfangsseitig in Vertiefungen eines Grundkörpers 6 des Rollierwerkzeugs 3 angeordnet und überragen dabei die Außenseite des Grundkörpers 6 in radialer Richtung. Das rotierend angetriebene Rollierwerkzeug 3 wird entlang der Längsachse 7 des Zylinders 2 verfahren, wobei das plastische Verformen dadurch realisiert wird, dass der von den Rollierkörpern 4 ausgebildete (größte) Kreisumfang im Durchmesser größer als der Innendurchmesser des Zylinders 2 (vor dem Verdichten) ist. Ein Eintauchen des Rollierwerkzeugs 3 in den Zylinder 2 wird durch eine konische Ausgestaltung der Anfangsabschnitte der Rollierkörper 4 ermöglicht. Nicht oder nur geringfügig verdichtet werden diejenigen Abschnitte der Zylinderwand, die beim Kontakt mit den Rollierkörpern 4 im Bereich der Vertiefungen 5 angeordnet sind. Das teilweise Verdichten der Zylinderwand führt zu einer Struktur, bei der sich nutförmige Vertiefungen mit dazwischen angeordneten Stegen abwechseln, wobei die Stege nicht oder weniger verdichtet wurden. Alternativ kann eine teilweise verdichtete Zylinderwand auch dadurch erzielt werden, dass von dem Rollierwerkzeug 3 definierte Bereiche des Zylinderwand nicht abgefahren werden.

Die Rollierkörper 4 des Rollierwerkzeugs 3 sind mit gleichmäßiger Teilung um eine Längsachse 8 des Grundkörpers 6, die bei der Nutzung des Rollierwerkzeugs 3 vorzugsweise im Wesentlichen koaxial zu der Längsachse 7 des Zylinders 2 ist, angeordnet. Dadurch kann erreicht werden, dass sich Reaktionskräfte, die von jeweils zwei sich gegenüberliegenden Rollierkörpern 4 auf den Grundkörper 6 übertragen werden, im Wesentlichen ausgleichen. Die Belastung des Rollierwerkzeugs 3 und einer dieses antreibenden Vorrichtung (nicht dargestellt) kann dadurch verringert werden.

Nach dem Verdichten wird die Zylinderwand bestrahlt (vgl. Fig. 3). Dazu wird mittels einer Düse 9, die beispielsweise als konventionelle Rundstrahldüse oder Flachstrahldüse ausgebildet sein kann, ein Medium, beispielsweise Wasser, unter Hochdruck (z.B. 500 bar bis 3500 bar, insbesondere 1500 bar bis 3500 bar) auf die Zylinderwand aufgebracht. Dadurch wird der Grundwerkstoff des Zylinderkurbelgehäuses 1 oberflächennah ungleichförmig abgetragen, wobei das Abtragen in den unverdichteten Abschnitten (den Stegen) stärker als in den verdichteten Abschnitten (den Nuten) erfolgt. Dies kann dazu führen, dass die unverdichteten Abschnitte, die nach dem Verdichten zunächst die Stege ausgebildet haben, nach dem Bestrahlen die Nuten der Struktur ausbilden (vgl. Fig. 4, in der zudem die vor dem Bestrahlen vorliegende Struktur mit gestrichelten Linien dargestellt ist). Zudem werden in allen Abschnitten ungleichförmig ausgebildete und angeordnete Mikrovertiefungen eingebracht, die insbesondere zu einer Verbesserung der Haftung der abschließend auf die bearbeitete Zylinderwand aufgebrachten Beschichtung führen können.

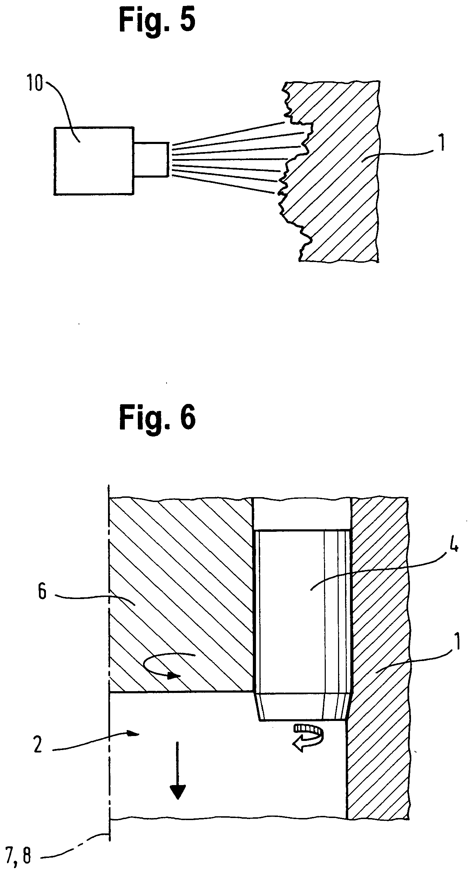

Anschließend wird eine Beschichtung auf die bearbeitete Zylinderwand aufgebracht (vgl. Fig. 5). Diese dient als Lauffläche für einen in dem Zylinder 2 geführten Kolben (nicht dargestellt) des Verbrennungsmotors. Die Beschichtung kann insbesondere mittels thermischen Spritzens (z.B. Lichtbogendrahtspritzen) aufgebracht werden, wozu in bekannter Weise ein Spritzkopf 10 rotierend angetrieben und entlang der Längsachse 7 des Zylinders 2 verfahren wird. Das aufgeschmolzene Beschichtungsmaterial kann dabei in die Nuten und Mikrovertiefungen eindringen, diese ausfüllen und - nach dem Aushärten - ein feste Verbindung der Beschichtung mit der Zylinderwand ausbilden.

Die Fig. 6 zeigt ein vollflächiges Verdichten der Zylinderwand als alternativer erster Schritt des zuvor beschriebenen, erfindungsgemäßen Verfahrens zum Beschichten einer Zylinderwand. Dabei wird unter "vollflächig" verstanden, dass der gesamte von dem für das Verdichten eingesetzten Werkzeug bearbeitete bzw. abgefahrene Abschnitt der Zylinderwand verdichtet wurde. Dies soll nicht ausschließen, dass Abschnitte der Zylinderwand nicht entsprechend bearbeitet und damit auch nicht verdichtet werden sollen. Zum vollflächigen Verdichten werden Rollierkörper 4 eingesetzt, die eine im Wesentlichen zylindrische Außenfläche aufweisen.

Sofern das Zylinderkurbelgehäuse 1 mehr als einen Zylinder 2 aufweist, kann vorgesehen sein, mehrere und insbesondere alle Zylinder 2 gleichzeitig erfindungsgemäß zu bearbeiten.

## Patentansprüche

1. Verfahren zum Beschichten einer Zylinderwand eines Verbrennungsmotors, wobei die Zylinderwand vor dem Beschichten aufgeraut wird, **dadurch gekennzeichnet, dass** die Zylinderwand vor dem Aufrauen durch plastische Verformung nur teilweise verdichtet wird und mehrere verdichtete und unverdichtete Abschnitte der Zylinderwand in abwechselnder Reihenfolge erzeugt werden.

2. Verfahren gemäß Anspruch 1, **dadurch gekennzeichnet, dass** das Aufrauen durch Bestrahlen mit einem flüssigen oder partikelförmigen Medium erfolgt.

3. Verfahren gemäß Anspruch 1 oder 2, **dadurch gekennzeichnet, dass** durch das Aufrauen Mikrovertiefungen erzeugt werden, deren Abmesssungen kleiner als die vergleichbaren Abmessungen einer infolge der nur teilweisen Verdichtung freigelegten Vertiefungsstruktur sind.

4. Verfahren gemäß einem der Ansprüche 1 bis 3, **dadurch gekennzeichnet, dass** das Aufrauen durch Belichtung mittels eines Lasers erfolgt.

5. Verfahren gemäß einem der Ansprüche 1 bis 4, **dadurch gekennzeichnet, dass** ein Beschichtungswerkstoff durch ein thermisches Spritzverfahren im aufgeschmolzenen Zustand auf die Zylinderwand aufgespritzt wird und dort aushärtet.

6. Verfahren gemäß Anspruch 5, **dadurch gekennzeichnet, dass** die Zylinderwand durch Lichtbogendrahtspritzen oder Plasmabeschichten beschichtet wird.

## Claims

1. Method of coating of a cylinder wall of an internal combustion engine, wherein the cylinder wall is roughened prior to coating, **characterised in that** the cylinder wall is only partially compressed prior to roughening through plastic deformation and several compressed and uncompressed sections of the cylinder wall are created in alternating succession.

2. Method according to claim 1, **characterised in that** the roughening is carried out by blasting with a liquid or particulate medium.

3. Method according to claim 1 or 2, **characterised in that** as a result of the roughening microdepressions are created the dimensions of which are less than the comparable dimensions of the depression structure exposed as a result of the only partial compression.

4. Method according to one of the claims 1 to 3, **characterised in that** the roughening is carried out through exposure by means of a laser.

5. Method according to one of the claims 1 to 4, **characterised in that** a coating material is sprayed onto the cylinder wall in a molten state and hardens there using a thermal spraying method.

6. Method according to claim 5, **characterised in that** the cylinder wall is coated by means of wire arc spraying or plasma coating.

## Revendications

1. Procédé de revêtement d'une paroi de cylindre d'un moteur à combustion interne, la paroi de cylindre étant rendue rugueuse avant le revêtement, **caractérisé en ce que** la paroi de cylindre, avant d'être rendue rugueuse, est compactée seulement partiellement par déformation plastique, plusieurs portions compactées et non compactées de la paroi de cylindre étant générées en alternance.

2. Procédé selon la revendication 1, **caractérisé en ce que** la rugosification s'effectue au jet avec un milieu liquide ou en forme de particules.

3. Procédé selon la revendication 1 ou 2, **caractérisé en ce que** la rugosification génère des microcavités dont les dimensions sont inférieures aux dimensions comparables d'une structure de cavité dégagée suite au compactage seulement partiel.

4. Procédé selon l'une des revendications 1 à 3, **caractérisé en ce que** la rugosification s'effectue par exposition au laser.

5. Procédé selon l'une des revendications 1 à 4, **caractérisé en ce qu'**une matière de revêtement est appliquée par un procédé de projection thermique dans l'état fondu sur la paroi de cylindre et y est durcie.

6. Procédé selon la revendication 5, **caractérisé en ce que** la paroi de cylindre est revêtue par projection au fil à arc électrique ou par revêtement au plasma.
